# FASCICULE DE BREVET EUROPEEN

(11) **EP 2 572 113 B1**
(45) Date de publication et mention de la délivrance du brevet: **12.08.2015**
(21) Numéro de dépôt: 11720514.6
(22) Date de dépôt: 19.05.2011
(51) Int. Cl.: F16C 3/035, F16C 29/04, F16D 3/06, F16C 29/12

(54) **DISPOSITIF D'ACCOUPLEMENT À BILLES À MAINTIEN PIVOTANT DE DEUX ARBRES COULISSANTS**
Kugelkupplungsvorrichtung mit Schwenkverbindung für zwei Schiebewellen
BALL-TYPE COUPLING DEVICE FOR COUPLING TWO SLIDING SHAFTS WITH PIVOTING SUPPORT

(30) Priorité: 20.05.2010 FR 1053929
(43) Date de publication de la demande: 27.03.2013
(73) Titulaire: Robert Bosch Automotive Steering Vendôme, 41100 Vendome (FR)
(72) Inventeur: FEVRE, Laurent, F-41000 Saint-Sulpice (FR); CAPELA, David, F-41160 Busloup (FR)
(74) Mandataire: Bugnion Genève
(86) Numéro de dépôt international: PCT/EP2011/058214
(87) Numéro de publication internationale: WO 2011/144715

(56) Documents cités:
- EP-A1- 1 167 790
- EP-A1- 1 566 324
- WO-A1-2009/153417
- FR-A1- 2 795 787

## Description

L'invention se rapporte à un dispositif d'accouplement en rotation de deux arbres coulissants suivant leur axe commun. Le dispositif d'accouplement de l'invention s'applique notamment à une colonne de direction de véhicule automobile, en l'adoptant à la partie intermédiaire de colonne reliée au boîtier de direction, ou à la partie haute de colonne reliée au volant de direction.

Dans le cas plus particulier de l'axe intermédiaire, celui-ci a un cardan à chaque extrémité : un cardan est relié à l'entrée de mouvement du boîtier de direction, et l'autre cardan est relié au haut de colonne. Pour avoir une direction correcte des véhicules automobiles actuels, il est nécessaire que la longueur de l'axe intermédiaire soit variable et s'adapte aux oscillations du train avant du véhicule, qui sont dues au profil et à l'état de surface du revêtement de la route. Cette caractéristique est également demandée pour faciliter l'assemblage sur le pignon de crémaillère, et pour absorber les déplacements lors d'un choc frontal du véhicule.

L'axe intermédiaire doit donc avoir tout d'abord une longueur variable, c'est-à-dire qu'il doit présenter une fonction coulissement de deux arbres l'un par rapport à l'autre suivant leur axe commun, qui est l'axe de la partie intermédiaire. De plus, il faut une fonction transmission du mouvement de rotation entre les deux arbres, et du couple de rotation nécessaire à la manoeuvre de la direction.

Il existe de nombreux dispositifs d'accouplement d'arbre coulissants, qui permettent d'associer le passage du couple de rotation entre les deux arbres par l'utilisation de cannelures, qui sont aménagées sur chacun des deux arbres avec des profils conjugués. Cependant ce type de dispositif présente un jeu franc après un cycle d'endurance équivalent à la durée de vie d'un véhicule, qui est celui demandé sur les voitures actuelles. Afin de retarder l'apparition de ce jeu franc, l'ajustement du coulissement des deux arbres lors de la fabrication est relativement serré, ce qui demande lors du montage en chaîne, un effort axial relativement important, d'où un temps de montage plus important et plus de pénibilité dans la réalisation de ce montage.

Cet ajustement doit être précis pour permettre l'absorption correcte des mouvements axiaux en fonctionnement. Hors lors du passage de couple de rotation, l'effort axial est fonction du couple à transmettre, il y a alors une augmentation de l'effort de coulissement lié au couple à transmettre et au coefficient de frottement, puis un déblocage axial brutal, d'où l'apparition d'à-coups préjudiciables au maintien d'un bon ajustement du coulissement avec un jeu réduit ; et néfaste à une bonne impression de conduite.

Il existe aussi des dispositifs d'accouplement qui utilisent l'injection plastique sur des parties cannelées appartenant à un arbre mâle métallique et un tube femelle métallique. Cette solution pose des problèmes pour absorber des mouvements axiaux sous des couples importants ; les efforts de coulissement augmentent proportionnellement aux forces de frottement entre les deux parties. Par ailleurs l'usure de l'injection plastique laisse apparaître des jeux. Une dernière solution existe en introduisant des éléments de roulements et des ressorts de contraintes entre l'arbre et le tube. Cette solution est satisfaisante pour le coulissement, sous couple avec un effort axial demandé relativement faible, mais elle pose des problèmes en terme de rigidité angulaire car elle est directement proportionnelle à la raideur et à la précontrainte des ressorts qui se compriment sous un certain Couple.

Le document WO 2009/153417 A1 divulgue un dispositif d'accouplement d'un arbre intérieur et arbre extérieur qui coulisse suivant la direction de leur axe commun avec des billes disposées entre les deux arbres.

Le but de la présente invention est de proposer un dispositif d'accouplement d'arbres coulissants qui évite les inconvénients précédents, c'est-à-dire un dispositif qui demande un effort axial qui ne soit pas lié au couple à transmettre. Il faut donc que l'effort axial augmente très peu lorsque le couple de rotation à transmettre augmente tout en ayant une forte rigidité angulaire de la transmission. De plus, il faut qu'il n'y ait pas d'apparition de jeu franc après le cycle d'endurance, et que le dispositif d'accouplement des deux arbres puisse se monter facilement dans les encombrements possibles existants sur les véhicules automobiles, et ceci avec un effort axial réduit de mise en place. Enfin il faut, que les moyens élastiques utilisés ne participent pas à la transmission du couple de rotation, pour conserver une forte rigidité angulaire de la transmission.

L'invention se rapporte à un dispositif d'accouplement de deux arbres : un arbre intérieur et un arbre extérieur qui coulissent l'un dans l'autre suivant la direction de leur axe commun. Ledit dispositif d'accouplement des deux arbres comporte des billes, qui sont disposées entre l'arbre intérieur et l'arbre extérieur.

Dans le dispositif d'accouplement, chacune desdites billes est disposée d'une part dans une partie concave de l'arbre intérieur, et d'autre part dans une partie concave de l'arbre extérieur.

Chacune desdites billes se déplace sur deux rails disposés de part et d'autre d'un plan médian passant par l'axe commun et par le centre desdites billes. Chacun des deux rails coopère avec la partie concave de l'un des deux arbres et pivote autour de chacune desdites billes, chaque rail étant parallèle à l'axe commun. Chacun des deux rails est poussé contre chacune desdites billes par un élément élastique disposé et prenant appui dans ladite partie concave ; chacune desdites billes se déplaçant directement contre la partie concave de l'autre arbre.

Le montage est réalisé de manière qu'au repos, lorsqu'il n'y a pas de transmission de couple, et qu'en action, lorsqu'il y a transmission de couple, chacune desdites billes soit toujours en contact de chaque côté du plan médian, par une zone d'appui avec le rail correspondant disposé dans la partie concave de l'un des deux arbres et qui pivote autour de ladite bille. Le montage est également réalisé pour que chacun desdits rails soit toujours en contact par une zone d'appui avec ladite partie concave, qui est aménagée de manière à rattraper tous les jeux et à éviter à chacun des deux rails de s'échapper; chacune desdites billes étant toujours en contact par une zone d'appui avec la partie concave de l'autre arbre.

Selon l'invention, la partie concave de l'arbre recevant les deux rails, comporte un fond réunissant deux flancs disposés de part et d'autre du plan médian, et ayant une section circulaire dont le centre se situe sur le plan médian à une légère distance du centre de la bille et plus proche dudit fond que ledit centre de la bille, de manière à éviter aux deux rails de s'échapper ; les deux flancs ayant un léger bourrelet à la jonction de la face de coulissement dudit arbre.

Selon l'invention, lors de la transmission du couple, l'effort transmis entre le rail et le flanc correspondant doit être situé à l'intérieur du cône de frottement pour éviter tout glissement dudit rail. De plus les deux faces d'appui et de contact de chacun des deux rails avec chacune des billes et avec chacun des deux flancs de la partie concave ont des faces ayant des profils conjugués pour éviter une pression de contact élevée.

Afin d'augmenter la sécurité de fonctionnement du dispositif d'accouplement de l'invention des rainures mâles et des rainures femelles avec des profils conjugués ayant un certain jeu, sont aménagées sur l'arbre intérieur et sur l'arbre extérieur, de façon qu'en cas de perte des billes, le couple puisse être encore transmis entre l'arbre intérieur et l'arbre extérieur.

Plusieurs structures du dispositif d'accouplement peuvent être élaborées. Dans une structure, les éléments élastiques sont disposés dans l'arbre intérieur. Dans une autre structure, les éléments élastiques sont disposés dans l'arbre extérieur. Dans une autre structure les éléments élastiques sont disposés pour certains dans l'arbre intérieur et pour les autres dans l'arbre extérieur.

Dans un agencement particulier de l'invention, le dispositif d'accouplement a les billes qui sont disposées en une ou plusieurs rangées axiales.

Pour chaque rangée de billes, il est aménagé dans l'arbre extérieur une partie concave en forme de rainure axiale, dont la section comporte deux faces concaves inclinées l'une par rapport à l'autre, qui viennent en contact avec les billes.

Pour chaque rangée de billes il est aménagé dans l'arbre intérieur une partie concave en forme de rainure axiale dont la section comporte un fond et deux flancs, les deux flancs ayant une section circulaire dont le centre est sur le plan médian passant par l'axe commun et par l'axe des centres des billes de ladite rangée ; ledit centre étant plus proche dudit fond que le centre de la bille.

Pour chaque rangée de billes, deux rails sont disposés de part et d'autre du plan médian et coopèrent avec la partie concave en forme de rainure axiale de l'arbre intérieur. Chaque rail est en forme de barre axiale, dont la section a une face d'appui interne et une face d'appui externe.

La face d'appui interne a une forme concave déterminée pour venir en contact avec la partie concernée desdites billes, par un profil conjugué. La face d'appui externe a une forme convexe déterminée pour venir au contact avec le flanc correspondant de forme concave, par un profil conjugué.

Chacun des deux rails est poussé par un élément élastique comportant deux barres axiales inclinées l'une par rapport à l'autre, dont chacune prend appui sur une face correspondante du fond approximativement perpendiculaire au flanc correspondant, afin que les rails puissent pivoter et tourner autour de la rangée de billes.

Dans un autre agencement particulier de l'invention, le dispositif d'accouplement a les billes, qui sont disposées en une ou plusieurs rangées axiales.

Pour chaque rangée de billes, il est aménagé dans l'arbre intérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, les deux flancs ayant une section circulaire dont le centre est sur le plan médian passant par l'axe commun et par l'axe des centres des billes de ladite rangée, ledit centre étant plus proche dudit fond que le centre de la bille.

Pour chaque rangée de billes, deux rails sont disposés de part et d'autre du plan médian et coopèrent avec la partie concave en forme de rainure axiale de l'arbre extérieur. Chaque rail est en forme de barre axiale dont la section a une face d'appui interne et une face d'appui externe. La face d'appui interne a une forme concave déterminée pour venir en contact avec la partie concernée desdites bille, par un profil conjugué, la face d'appui externe a une forme convexe déterminée pour venir en contact avec le flanc correspondant de forme concave, par un profil conjugué.

Chacun des deux rails est poussé par un élément élastique comportant deux barres axiales inclinées l'une par rapport à l'autre, dont chacune prend appui sur une face correspondante du fond approximativement perpendiculaire au flanc correspondant, afin que les rails puissent pivoter et tourner autour de la rangée de billes.

Selon différentes réalisations de l'invention, l'élément élastique est métallique et comporte deux barres axiales inclinées l'une par rapport à l'autre, chaque barre axiale étant munie de languettes élastiques qui poussent le rail correspondant, en prenant appui sur la face correspondante du fond avec un élément d'accrochage à chaque extrémité axiale.

Dans d'autres réalisations de l'invention l'élément élastique est en matériau élastique et comporte deux barres inclinées l'une par rapport à l'autre, chaque barre axiale, étant munie d'un bourrelet axial qui pousse le rail correspondant, en prenant appui sur la face correspondante du fond.

Selon un mode de réalisation du dispositif d'accouplement de l'invention les billes sont disposées en une première rangée axiale, l'arbre intérieur étant muni d'une rainure axiale et l'arbre extérieur étant muni d'une rainure axiale ; le dispositif comportant une autre rangée de billes qui est diamétralement opposée à la première rangée de billes et qui s'appuient directement dans une rainure axiale de l'arbre intérieur et dans une rainure axiale de l'arbre extérieur.

Selon un autre mode de réalisation du dispositif d'accouplement de l'invention les billes sont disposées en deux rangées axiales diamétralement opposées ; l'arbre intérieur étant muni de deux rainures axiales diamétralement opposées et l'arbre extérieur étant muni de deux rainures axiales diamétralement opposées.

Selon un autre mode de réalisation du dispositif d'accouplement de l'invention, les billes sont disposées en trois rangées axiales qui sont disposées transversalement à 120° les unes des autres, l'arbre intérieur étant muni de trois rainures axiales, qui sont disposées transversalement à 120° les unes des autres, et l'arbre extérieur étant muni de trois rainures axiales, qui sont disposées transversalement à 120° les unes des autres.

Le dispositif d'accouplement selon l'invention s'applique soit à la partie intermédiaire d'une colonne de direction de véhicule automobile, soit à la partie haute d'une colonne de direction de véhicule automobile.

Le dispositif d'accouplement de deux arbres suivant leur axe commun selon l'invention présente ainsi l'avantage d'avoir toujours deux zones d'appui pour chacun des deux arbres intérieur et extérieur et pour chaque rangée de billes, qui sont toujours en contact même lorsqu'il n'y a pas de transmission de couple de rotation.

De plus, il y a un effort axial réduit qui est nécessaire lors du montage en chaîne. L'ajustement précis du dispositif d'accouplement de l'invention pennet d'éviter les à-coups axiaux lors de la conduite du véhicule, et garantit la bonne tenue à l'endurance en évitant l'apparition de jeu franc dans l'accouplement. De plus, lors du passage du couple de rotation, l'effort axial est réduit considérablement du fait du contact par roulement et par glissement. D'autre part, le dispositif d'accouplement n'est pas influencé par les moyens élastiques, qui ne participent pas à la transmission du couple, ce qui permet de conserver une forte rigidité angulaire de la transmission. Enfin, le dispositif d'accouplement peut se monter facilement dans l'encombrement existant des colonnes de direction de véhicule automobile.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est une vue schématique en perspective d'une direction de véhicule automobile, dans laquelle le dispositif d'accouplement de l'invention s'applique à la partie intermédiaire de colonne ;
- la figure 2 est une vue axiale en perspective de la partie intermédiaire de colonne ;
- la figure 3 est une vue éclatée en perspective de la figure 2 ;
- la figure 4 est une coupe transversale d'un mode de réalisation de l'invention à une seule rangée de billes dans l'arbre intérieur ;
- la figure 5 est une coupe transversale, d'un autre mode de réalisation de l'invention à trois rangées de billes dans l'arbre intérieur ;
- les figures 6, 7, 8 sont des vues de détail d'une rangée de billes de la figure 5, avec différentes positions des deux rails ;
- la figure 9 est une coupe transversale correspondant à la figure 5, les rails étant en coupe ;
- la figure 10 est une vue de détail d'une rangée de billes de la figure 9 ;
- la figure 11 est une coupe transversale analogue à la figure 4, avec une seule rangée de billes dans l'arbre extérieur ;
- les figures 12, 13, 14 sont des vues de détail en coupe d'une rangée de billes dans l'arbre extérieur, avec différentes positions des deux rails ;
- la figure 15 est une coupe transversale de l'invention correspondant aux figures 12, 13, 14 ;
- la figure 16 est une vue en perspective de l'élément élastique représenté sur les figures 2 à 15 :
- la figure 17 est une coupe transversale d'un autre mode de réalisation de l'invention à trois rangées de billes dans l'arbre intérieur ;
- la figure 18 est une coupe transversale d'un autre mode de réalisation à trois rangées de billes dans l'arbre extérieur ;
- la figure 19 est une vue en perspective de l'élément élastique représenté sur les figures 17 et 18.

L'invention se rapporte à un dispositif d'accouplement en rotation de deux arbres qui coulissent l'un dans l'autre suivant leur axe commun.

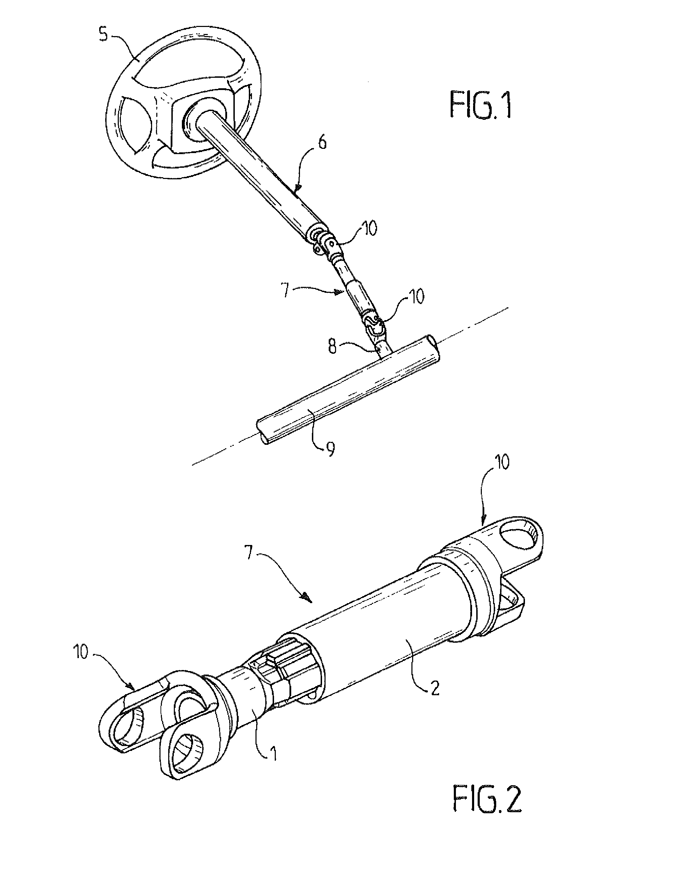

Ce dispositif d'accouplement s'applique particulièrement bien à une direction de véhicule automobile, comme celle qui est représentée schématiquement sur la figure 1.

La direction représentée comporte une colonne de direction avec une partie haute de colonne 6 appelée aussi haut de colonne, et une partie intermédiaire de colonne 7 appelée aussi axe intermédiaire.

La partie haute de colonne 6 est reliée par son extrémité supérieure au volant de direction 5, et par son extrémité inférieure à la partie intermédiaire de colonne 7.

La partie intermédiaire de colonne 7 est reliée par son extrémité supérieure à la partie haute de colonne 6, et par son extrémité inférieure au boîtier de direction 8 de la tige de direction 9.

La partie intermédiaire de colonne 7 est reliée à chacune de ses extrémités au moyen d'une articulation en joint de cardan référencée 10 pour la partie haute de colonne 6, et également référencée 10 pour le boîtier de direction 8.

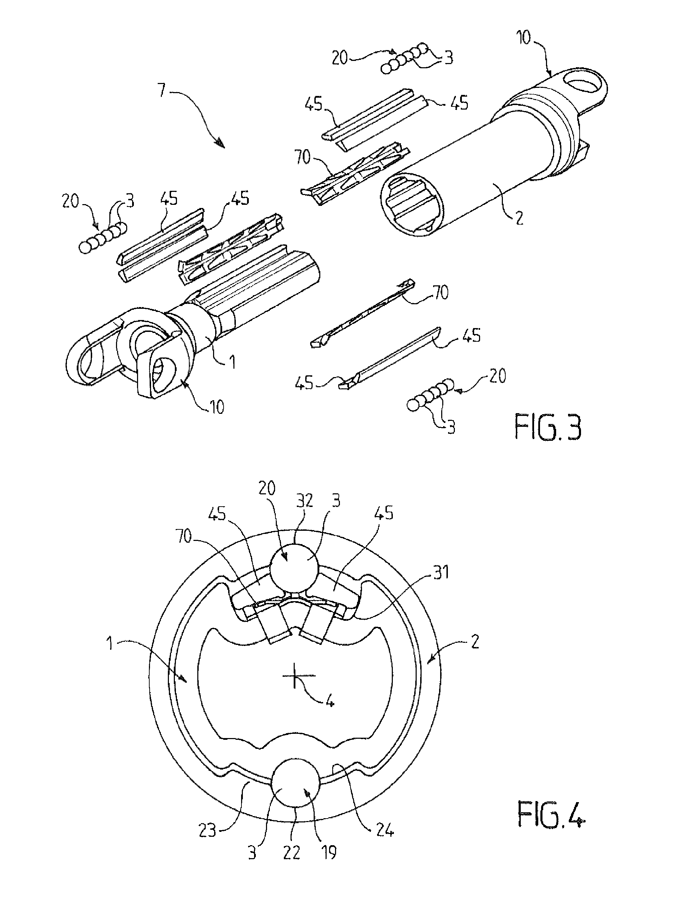

Dans ce qui suit, la description se rapporte à un dispositif d'accouplement qui est aménagé dans la partie intermédiaire de colonne 7 représenté sur les figures 2 et 3. Le dispositif d'accouplement de l'invention peut également être aménagé dans la partie haute de colonne 6.

Un arbre intérieur 1 et un arbre extérieur 2 coulissent l'un dans l'autre suivant la direction de leur axe commun 4, qui est représenté sur les figures 2 et 3. Le dispositif d'accouplement des deux arbres comporte des billes 3 dans les différents modes de réalisation décrits ci-après. Les billes 3 sont disposées entre l'arbre intérieur 1 et l'arbre extérieur 2. Dans le dispositif d'accouplement de l'invention, chacune desdites billes 3 est disposé d'une part dans une partie concave de l'arbre intérieur 1, et d'autre part dans une partie concave de l'arbre extérieur 2.

Chacune desdites billes 3 se déplace sur deux rails qui coopèrent avec la partie concave de l'un des deux arbres, qui pivotent autour desdites billes 3, et qui sont parallèles à l'axe commun 4. Chacun des deux rails est poussé contre chacune desdites billes 3 par un élément élastique, qui est disposé et prend appui dans ladite partie concave. Chacune desdites billes 3 se déplace directement contre la partie concave de l'autre arbre.

Le dispositif d'accouplement selon l'invention est agencé de manière qu'au repos, lorsqu'il n'y a pas de transmission de couple, et qu'en action, lorsqu'il y a transmission de couple ; chacune a desdites billes 3 soit toujours en contact, de chaque côté d'un plan médian passant par le centre des billes 3 et par l'axe commun 4, par une zone d'appui avec le rail correspondant. Ledit rail est disposé dans la partie concave de l'un des deux arbres et pivote autour de ladite bille 3 selon une caractéristique essentielle de l'invention. Selon une autre caractéristique essentielle de l'invention, chacun desdits rails est toujours en contact par une zone d'appui avec ladite partie concave, qui est aménagée de manière à rattraper tous les jeux dus aux tolérances de fabrication et à éviter à chacun des deux rails de s'échapper ; chacune desdites billes 3 étant toujours en contact par une zone d'appui avec la partie concave de l'autre arbre.

L'ensemble de la partie intermédiaire de colonne 7 est représentée en perspective sur la figure 2 et en vue éclatée sur la figure 3. L'arbre intérieur 1 et l'arbre extérieur 2 coulissent avec les billes 3 suivant leur axe commun 4. La partie intermédiaire de colonne 7 est reliée au boîtier de direction 8 par le joint de cardan 10, et elle est reliée à la partie haute de colonne 6 par le joint de cardan 10.

Le dispositif d'accouplement comporte des billes 3 qui sont disposées en une ou plusieurs rangées axiales : 1 rangée axiale est représentée avec les figures 4 et 11, 2 rangées axiales sont représentées par similitude avec les mêmes figures 4 et 11, et 3 rangées axiales sont représentées avec les figures 3, 5, 9, 15, 17, et 18.

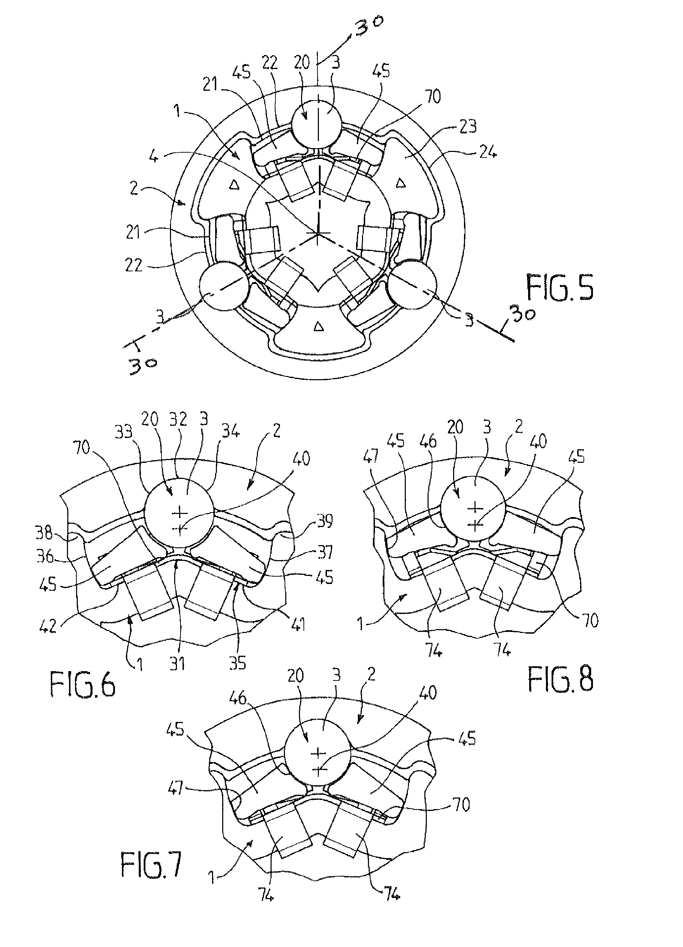

Le dispositif d'accouplement représenté en vue éclatée avec la figure 3 et en coupe transversale sur la figure 5, 9, et 17, comporte des billes qui sont disposées en trois rangées axiales 20. Les rangées axiales 20 sont situées transversalement à 120° les unes des autres. L'arbre intérieur 1 est muni de trois rainures axiales 31 qui sont situées transversalement à 120° les unes des autres. L'arbre extérieur 2 est muni de trois rainures axiales 32, qui sont situées transversalement à 120° les unes des autres.

Pour chaque rangée 20 de billes 3, il est aménagé dans l'arbre extérieur 2 un partie concave en forme de rainure axiale 32, dont la section comporte deux faces concave 33, 34 inclinées l'une par rapport à l'autre qui viennent en contact avec les billes 3.

Pour chaque rangée 20 de billes 3, il est aménagé dans l'arbre intérieur 1 une partie concave en forme de rainure axiale 31 dont la section comporte un fond 35 et deux flancs 36, 37. Les deux flancs 36, 37 ont une section circulaire dont le centre 40 est sur le plan médian 30 passant par l'axe commun (4) et par l'axe des centres des billes 3 de ladite rangée 20. Ledit centre 40 est à une légère distance du centre de la bille et est plus proche dudit fond 35 que le centre de la bille 3, de manière à éviter aux deux rails 45 de s'échapper. De plus chaque flanc 36, 37 comporte un léger bourrelet correspondant 38, 39, qui est à l'extérieur de chaque flanc 36, 37 à la jonction de la face de coulissement 21 de l'arbre intérieur 1.

Pour chaque rangée de 20 billes 3, il y a deux rails 45, qui sont disposés de part et d'autre du plan médian 30. Les rails 45 coopèrent avec la partie concave en forme de rainure axiale 31 de l'arbre intérieur 1.

Chaque rail 45 est en forme de barre axiale, dont la section a une face d'appui interne 46 et une face d'appui externe 47.

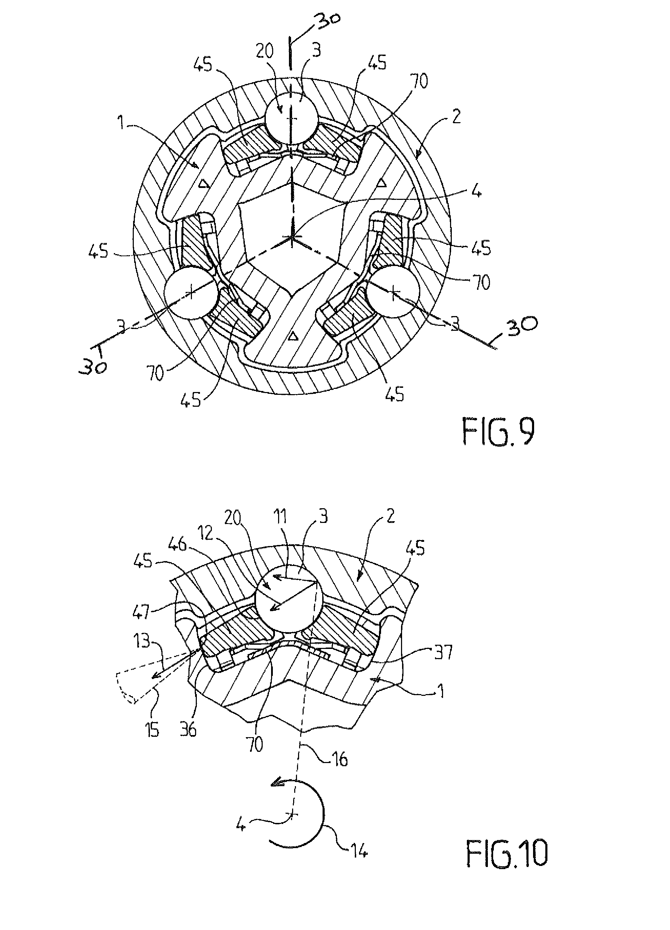

La face d'appui interne 46 est de forme concave et est déterminée pour venir en contact avec la partie concernée desdites billes 3. La face d'appui interne 46 a un profil conjugué avec la partie concernée desdites billes 3. La face d'appui externe 47 est de forme convexe et est déterminée pour venir en contact avec le flanc 36, 37 correspondant de forme concave. La face d'appui externe 47 et le flanc 36, 37 correspondants ont des profils conjugués. Les profils conjugués du rail 45 avec la partie des billes 3 et les flancs 36, 37 permettent d'avoir une pression de contact réduite. De plus lors de la transmission du couple, l'effort transmis entre le rail 45 et le flanc 36, 37 correspondant est situé à l'intérieur du cône de frottement des faces de contact, ce qui évite tout glissement du rail 45, comme cela est représenté sur la figure 10.

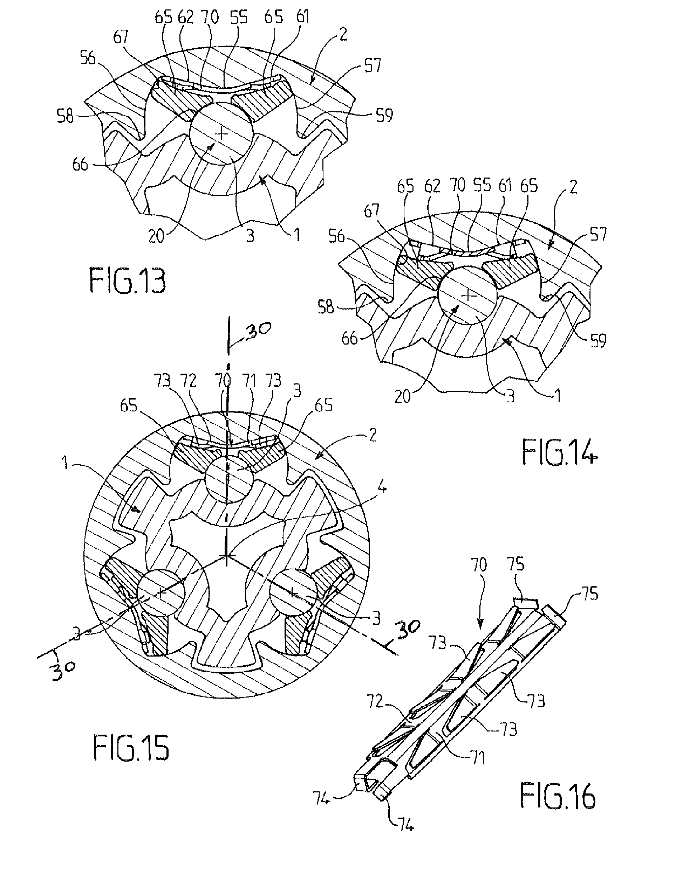

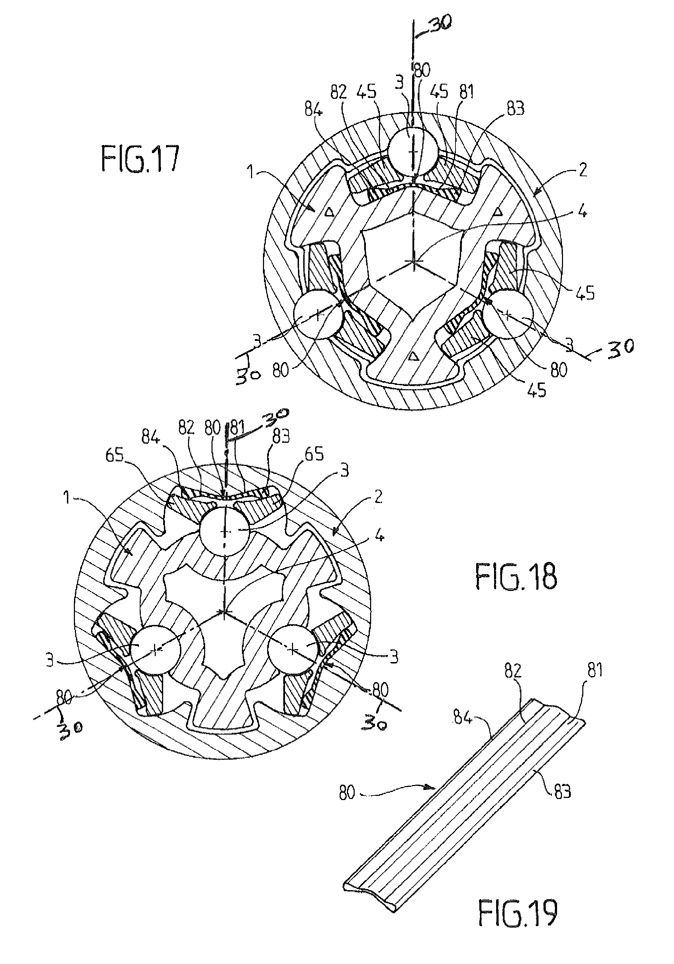

Chacun des deux rails 45 est poussé par un élément élastique 70 (figure 16) ou 80 (figure 19). L'élément élastique 70, 80 comporte deux barres axiales 71, 72 ou 81, 82 qui sont inclinées l'une par rapport à l'autre. Chacune des barres axiales 71, 72 ou 81, 82 prend appui sur une face 41, 42 correspondante du fond 35, qui est approximativement perpendiculaire au flanc 36, 37 correspondant afin que les rails 45 puissent pivoter et tourner autour de la rangée 20 de billes 3 pour rattraper tous les jeux dus aux tolérances de fabrication. Différentes positions sont représentées sur les figures 6 à 8 ; la figure 6 au cours du montage, et les figures 7 et 8 pour chacune des positions extrêmes.

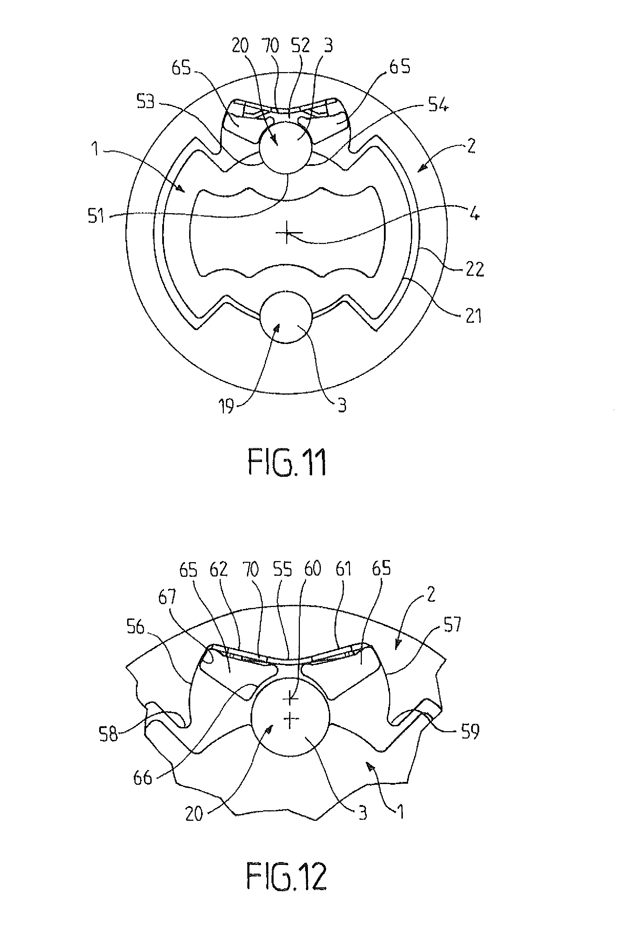

Le dispositif d'accouplement représenté en coupe transversale selon les figures 11, 15 et 18 comporte des billes 3 qui sont disposées en trois rangées axiales 20. Les rangées axiales 20 sont situées transversalement à 120° les unes des autres. L'arbre intérieur 1 est muni de trois rainures axiales 51, qui sont situées transversalement à 120° les unes des autres. L'arbre extérieur 2 est muni de trois rainures axiales 52, qui sont situées transversalement à 120° les unes des autres.

Pour chaque rangée 20 de billes 3, il est aménagé dans l'arbre intérieur 1 une partie concave en forme de rainure axiale 51, dont la section comporte deux faces concave 53, 54 inclinées l'une par rapport à l'autre, qui viennent en contact avec les billes 3.

Pour chaque rangée 20 de billes 3 il est aménagé dans l'arbre extérieur 2 une partie concave en forme de rainure axiale 52 dont la section comporte un fond 55 et deux flancs 56, 57. Les deux flancs 56, 57ont une section circulaire dont le centre 60 est sur le plan médian 30 passant par l'axe commun 4 et par l'axe des centres des billes 3 de ladite rangée 20. Ledit centre 60 est à une légère distance du centre de la bille 3 et est plus proche dudit fond 55 que le centre de la bille 3, de manière à éviter aux deux rails 65 de s'échapper. De plus chaque flanc 56, 57 comporte un léger bourrelet correspondant 58, 59, qui est à l'extérieur de chaque flanc 56, 57à la jonction de la face de coulissement 22 de l'arbre extérieur 2.

Pour chaque rangée 20 de billes 3, il y a deux rails 65, qui sont disposés de part et d'autre du plan médian 30. Les rails 65 coopèrent avec la partie concave en forme de rainure axiale 52 de l'arbre extérieur2.

Chaque rail 65 est en forme de barre axiale, dont la section a une face d'appui interne 66 et une face d'appui externe 67.

La face d'appui interne 66 est de forme concave et est déterminée pour venir en contact avec la partie concernée desdites billes 3. La face d'appui interne 66 a un profil conjugué avec la partie concernée desdites billes 3. La face d'appui externe 67 est de forme convexe et est déterminée pour venir en contact avec le flanc 56, 57 correspondant de forme concave. La face d'appui externe 67 et le flanc 56, 57 correspondants ont des profils conjugués. Les profils conjugués du rail 65 avec la partie des billes 3 et les flancs 56, 57 permettent d'avoir une pression de contact réduite. De plus lors de la transmission du couple, l'effort transmis entre le rail 65 et le flanc 56, 57 correspondant est situé à l'intérieur du cône de frottement des faces de contact, ce qui évite tout glissement du rail 65, comme cela est représenté sur la figure 10.

Chacune des deux rails 65 est poussé par un élément élastique 70 (figure 16) ou 80 (figure 19). L'élément élastique 70, 80 comporte deux barres axiales 71, 72 ou 81, 82 qui sont inclinées l'une par rapport à l'autre. Chacune des barres axiales 71, 72 ou 81, 82 prend appui sur une face 61, 62 correspondante du fond 55 qui est approximativement perpendiculaire au flanc 56, 57 correspondant, afin que les rails 65 puissent pivoter et tourner autour de la rangée 20 de billes 3 pour rattraper tous les jeux dus aux tolérances de fabrication. Différentes positions sont représentées sur les figures 12, 13 et 14, la figure 12 au cours du montage, la figure 13 pour une position extrême et la figure 14 pour une position moyenne.

Quel que soit le mode de réalisation représenté sur les figures, chacun des deux rails 45 ou 65 peut être poussé par un élément élastique 70 ou 80. L'élément élastique 70 est représenté sur la figure 16 est métallique et comporte deux barres axiales 71 et 72 qui sont inclinées l'une par rapport à l'autre. Chaque barre axiale 71 ou 72 est munie de languettes élastiques 73 qui poussent le rail 45 ou 65. Chaque barre axiale 71 ou 72 est munie d'un élément d'accrochage 74 et 75 correspondant à chaque extrémité axiale, et prend appui sur la face correspondante 41, 42 ou 61, 62 du fond 35 ou 55 comme cela est représenté sur les figures 3 à 16.
L'élément élastique 80 représenté sur la figure 19 est en matériau élastique et comporte deux barres axiales 81 et 82 qui sont inclinées l'une par rapport à l'autre. Chaque barre axiale 81 ou 82 est munie d'un bourrelet ou bossage axial 83 ou 84 correspondant qui pousse le rail 45 ou 65, et elle prend appui sur la face correspondante 41, 42 ou 61, 62 du fond 35 ou 55, comme cela est représenté sur les figures 17, 18 et 19.

Comme cela est représenté notamment sur les figures 4, 5, 11 et 15 l'arbre intérieur 1 a une face de coulissement 21 qui est munie de rainures mâles 23 et l'arbre extérieur 2 a une face de coulissement 22 qui est munie de rainures femelles 24. La face de coulissement 21 de l'arbre intérieur 1 correspond à la face externe dudit arbre intérieur 1 et la face de coulissement 22 de l'arbre extérieur 2 correspond à la face interne dudit arbre 2. Les rainures mâles 23 et les rainures femelles 24 ont des profils conjugués avec un certain jeu pour qu'en cas de perte des billes 3, le couple puisse encore être transmis entre l'arbre intérieur 1 et l'arbre extérieur 2.

Comme cela est représenté sur les figures 4 et 11, les billes 3 sont déposées en une première rangée axiale 20, avec l'arbre intérieur 1 qui est muni d'une rainure axiale 31 ou 51, et l'arbre extérieur 2 qui est muni d'une rainure axiale 32 ou 52. Une deuxième rangée axiale 19 de bille 3 est diamétralement opposée à la première rangée axiale 20 de billes 3, et elle s'appuie directement dans une rainure axiale 32 de l'arbre extérieur 2.

Dans une autre forme de réalisation de l'invention non représentée sur les figures mais en partant des figures 4 et 11, les billes sont déposées en deux rangées axiales 20 diamétralement opposées. L'arbre intérieur 1 est muni de deux rainures axiales 31, 51 diamétralement opposées et l'arbre extérieur 2 est muni de deux rainures axiales 32, 52 diamétralement opposées.

Dans une autre forme de réalisation de l'invention représentée sur les figures 3, 5, 9, 15, 17 et 18, les billes 3 sont déposées en trois rangées axiales 20 qui sont disposées transversalement à 120° les unes des autres. L'arbre intérieur 1 est muni de trois rainures axiales 31, 51 qui sont disposées transversalement à 120° les unes des autres.
L'arbre extérieur 2 est muni de trois rainures axiales 32, 52 qui sont disposées transversalement à 120° les unes des autres.

Dans des modes de réalisations non représentées sur les figures ; les éléments élastiques 70 ou 80 sont disposés pour certains dans l'arbre intérieur 1 et pour les autres dans l'arbre extérieur 2 ; lesdits éléments élastiques 70, 80 poussant les deux rails 45 ou 65 correspondants, qui coopèrent avec l'arbre considéré 1, 2.

Le dispositif fonctionne de la façon suivante :
Afin de monter le système et comme représenté sur la figure 6 on utilise les rails 45 pour comprimer les ressorts 70 créant un jeu entre les billes 3 et les rails 45.

Une fois montés, les rails 45 sont relâchés et les rails 45 sont poussés par les ressorts 70, le système se met en place permettant ainsi de rattraper les jeux dus aux tolérances de fabrication, les figures 7, 8 montrent les positions extrêmes du système.

Comme illustré dans la figure 5 les rails 45 pivotent autour d'un axe de rotation qui correspond au centre des billes 3, cet axe est parallèle à l'axe commun 4 des deux arbres 1 et 2.

Les rails 45 sont mis en place lorsqu'ils viennent en contact avec les surfaces aménagées dans l'arbre 2 par l'intermédiaire des billes 3.

A cette étape, les deux arbres 1 et 2 peuvent coulisser l'un par rapport à l'autre par l'intermédiaire des billes 3 ce qui permet d'obtenir un effort de coulissement relativement faible.

Comme illustré dans la figure 10, lors de la transmission d'un couple 14 autour de l'axe 4 commun à l'arbre 1 et au tube 2, un effort tangentiel 11 donné par le bras de levier fictif 16 engendre un effort normal 12 entre l'arbre 2 et la bille 3.

Cet effort normal 12 engendre à son tour un effort 13 entre le rail 45 et l'arbre 1 en passant par le contact bille et rail.

Afin de permettre au système une transmission de couple sans mouvement, l'effort 13 doit être compris dans un cône de frottement 15 résultant du contact entre l'arbre et le rail.

Durant la vie du véhicule, la fatigue du ressort aura moins d'impact que sur les systèmes actuels car il n'entre pas en considération lors de la transmission du couple, par conséquent la raideur du dispositif d'accouplement perdra moins de raideur.

## Revendications

1. Dispositif d'accouplement de deux arbres, un arbre intérieur (1) et un arbre extérieur (2) qui coulissent l'un dans l'autre suivant la direction de leur axe commun (4), ledit dispositif d'accouplement des deux arbres comporte des billes (3) qui sont disposées entre l'arbre intérieur (1) et l'arbre extérieur (2), chacune desdites billes (3) étant disposée d'une part dans une partie concave de l'arbre intérieur (1), et d'autre part dans une partie concave de l'arbre extérieur (2), **caractérisé en ce que** :
- chacune desdites billes (3) se déplace sur deux rails (45, 65) disposés de part et d'autre d'un plan médian (30) passant par l'axe commun (4) et par le centre desdites billes (3);
- chacun des deux rails (45, 65) coopère avec la partie concave (31, 52) de l'un des deux arbres (1, 2) et pivote autour de chacune desdites billes (3), chaque rail (45, 65) étant parallèle à l'axe commun (4) ;
- chacun des deux rails (45, 65) étant poussé contre chacune desdites billes (3) par un élément élastique (70, 80) ; disposé et prenant appui dans ladite partie concave (31, 52) ;
- chacune desdites billes (3) se déplaçant directement contre la partie concave (32, 51) de l'autre arbre (2, 1), de manière :
- qu'au repos, lorsqu'il n'y a pas de transmission de couple, et qu'en action, lorsqu'il y a transmission de couple,
- chacune desdites billes (3) soit toujours en contact de chaque côté du plan médian (30), par une zone d'appui avec le rail correspondant (45, 65) disposé dans la partie concave (31, 52) de l'un des deux arbres (1, 2) et qui pivote autour de ladite bille (3),
- chacun desdits rails (45, 65) soit toujours en contact par une zone d'appui avec ladite partie concave (31, 52), qui est aménagée de manière à rattraper tous les jeux et à éviter à chacun des deux rails (45, 65) de s'échapper,
- chacune desdites billes (3) soit toujours en contact par une zone d'appui avec la partie concave (32, 51) de l'autre arbre (2,1).

2. Dispositif d'accouplement selon la revendication 1, **caractérisé en ce que** la partie concave (31, 52) de l'arbre (1, 2) recevant les deux rails (guides) (45, 65), comporte un fond (35, 55) réunissant deux flancs (36, 37-56, 57) disposés de part et d'autre du plan médian (30), les deux flans (36, 37-56, 57) ayant une section circulaire dont le centre (40, 60) se situe sur le plan médian 30 à une légère distance du centre de la bille (3) et plus proche dudit fond (35, 55) que ledit centre de la bille (3), de manière à éviter aux deux rails (45, 65) de s'échapper.

3. Dispositif d'accouplement selon la revendication 2, **caractérisé en ce que** lors de la transmission du couple, l'effort transmis entre le rail (45, 65) et le flanc correspondant (36, 37-56, 57) soit situé à l'intérieur du cône de frottement pour éviter tout glissement dudit rail (45, 65).

4. Dispositif d'accouplement selon la revendication 2, **caractérisé en ce que** les deux faces d'appui et de contact de chacun des deux rails (45, 65) avec chacune des billes (3) et avec chacun des deux flancs (36, 37-56, 57) de la partie concave (31, 52) soient des faces ayant des profils conjugués pour éviter une pression de contact élevée.

5. Dispositif d'accouplement selon la revendication 2, **caractérisé en ce que** l'arbre extérieur présente une face interne constituant une face de coulissement, l'arbre intérieur présentant une face externe constituant une face de coulissement, et **en ce que** chacun des deux flancs (36, 37-56, 57) de la partie concave (31, 52) de l'arbre (1, 2) comporte un léger bourrelet (38, 39-58, 59) à l'extérieur des deux flancs (36, 37-56, 57), à la jonction de la face de coulissement (21, 22) dudit arbre (1, 2).

6. Dispositif d'accouplement selon l'une quelconque des revendications précédentes, **caractérisé en ce que** des rainures mâles (23) et des rainures femelles (24) avec des profils conjugués ayant un certain jeu, sont aménagées sur l'arbre intérieur (1) et sur l'arbre extérieur (2), de façon qu'en cas de rupture des billes (3), le couple puisse être encore transmis entre l'arbre intérieur (1) et l'arbre extérieur (2),

7. Dispositif d'accouplement selon l'une quelconque des revendications précédentes, **caractérisé en ce que** les éléments élastiques (70, 80) sont disposés dans l'arbre intérieur (1) et poussent les deux rails (45), qui coopèrent avec l'arbre intérieur (1).

8. Dispositif d'accouplement selon l'une quelconque des revendications 1 à 6 **caractérisé en ce que** les éléments élastiques (70, 80) sont disposés dans l'arbre extérieur (2) et poussent les deux rails (65), qui coopèrent avec l'arbre extérieur (2).

9. Dispositif d'accouplement selon l'une quelconque des revendications 1 à 6, **caractérisé en ce que** les éléments élastiques (70, 80) sont disposés pour certains dans l'arbre intérieur (1) et pour les autres dans l'arbre extérieur (2), lesdits éléments élastiques (70, 80) poussant les deux rails (45, 65) correspondants, qui coopèrent avec l'arbre considéré (1, 2).

10. Dispositif d'accouplement selon la revendication 2 **caractérisé en ce que** les billes (3) sont disposées en une ou plusieurs rangées axiales (20) :
- pour chaque rangée (20) de billes (3), il est aménagé dans l'arbre extérieur '(2) une partie concave en forme de rainure axiale (32), dont la section comporte deux faces concaves (33, 34) inclinées l'une par rapport à l'autre, qui viennent en contact avec les billes (3)
- pour chaque rangée de billes (3), il est aménagé dans l'arbre intérieur (1) une partie concave en forme de rainure axiale (31) dont la section comporte un fond (35) et deux flancs (36, 37), les deux flancs (36, 37) ayant une section circulaire dont le centre (40) est sur le plan médian (30) passant par l'axe commun (4) et par l'axe des centres des billes (3) de ladite rangée (20) ; ledit centre (40) étant plus proche dudit fond (35), que le centre de la bille (3) ;
- pour chaque rangée (20) de billes (3), deux rails (45) sont disposés de part et d'autre du plan médian (30) et coopèrent avec la partie concave en forme de rainure axiale (31) de l'arbre intérieur (1), chaque rail (45) est en forme de barre axiale, dont la section a :
• une face d'appui (46) interne de forme concave déterminée pour venir en contact avec la partie concernée desdites billes (3), par un profil conjugué ;
• une face d'appui externe (47) de forme convexe déterminée, pour venir en contact avec le flanc (36, 37) correspondant de forme concave, par un profil conjugué;
- chacun des deux rails (45) est poussé par un élément élastique (70, 80) comportant deux barres axiales (71, 72-81, 82) inclinées l'une par rapport à l'autre, dont chacune prend appui sur une face correspondante (41, 42) du fond (35) approximativement perpendiculaire au flanc (36, 37) correspondant, afin que les rails (45) puissent pivoter et tourner autour de l'axe de la rangée (20) de billes (3).

11. Dispositif d'accouplement selon la revendication 2 **caractérisé en ce que** les billes sont disposées en une ou plusieurs rangées axiales (20) :
- pour chaque rangée (20) de billes (3), il est aménagé dans l'arbre intérieur (1) une partie concave en forme de rainure axiale (51), dont la section comporte deux faces concaves (53, 54) inclinées l'une par rapport à l'autre, qui viennent en contact avec les billes (3) ;
- pour chaque rangée (20) de billes (3), il est aménagé dans l'arbre extérieur (2) une partie concave en forme de rainure axiale (52) dont la section comporte un fond (55) et deux flancs (56, 57), les deux flancs (56, 57) ayant une section circulaire dont le centre (60) est sur le plan médian (30) passant par l'axe commun (4) et par l'axe des centres des billes (3) de ladite rangée (20), ledit centre (60) étant plus proche dudit fond (55) que le centre de la bille (3) ;
- pour chaque rangée (20) de billes (3), deux rails (65) sont disposés de part et d'autre du plan médian (30) et coopèrent avec la partie concave en forme de rainure axiale (52) de l'arbre extérieur (2), chaque rail (65) est en forme de barre axiale dont la section a :
• une face d'appui interne (66) de forme concave déterminée pour venir en contact avec la partie concernée desdites billes (3), par un profil conjugué ;
• une face d'appui externe (67) de forme convexe déterminée pour venir en contact avec le flanc (56, 57) correspondant de forme concave, par un profil conjugué ;
- chacun des deux rails (65) est poussé par un élément élastique (70, 80) comportant deux barres axiales (71, 72-81, 82) inclinées l'une par rapport à l'autre, dont chacune prend appui sur une face correspondante (61, 62) du fond (55) approximativement perpendiculaire au flanc correspondant (56, 57), afin que les rails (65) puissent pivoter et tourner autour de la rangée (20) de billes (3).

12. Dispositif d'accouplement selon l'une quelconque des revendications 10 et 11, **caractérisé en ce que** l'élément élastique (70) est métallique et comporte deux barres axiales (71, 72) inclinées l'une par rapport à l'autre, chaque barre axiale (71, 72) :
• étant munie de languettes élastiques (73) qui poussent le rail correspondant (45, 65),
• ayant un élément d'accrochage (74, 75) à chaque extrémité axiale,
• et prenant appui sur la face (41, 42-61, 62) correspondante du fond (35, 55).

13. Dispositif d'accouplement selon l'une quelconque des revendications 10 et 11, **caractérisé en ce que** l'élément élastique (80) est en matériau élastique et comporte deux barres axiales (81, 82) inclinées l'une par rapport à l'autre, chaque barre axiale (81, 82) :
• étant munie d'un bourrelet ou bossage axial (83, 84) qui pousse le rail (45, 65) correspondant,
• et prenant appui sur la face(41, 42-61, 62) correspondante du fond (35, 55).

14. Dispositif d'accouplement selon l'une quelconque des revendications 10 à 13, **caractérisé en ce que** :
- les billes (3) sont disposées en une première rangée axiale (20), l'arbre intérieur (1) étant muni d'une rainure axiale (31, 51), et l'arbre extérieur (2) étant muni d'une rainure axiale (32, 52) ;
- une autre rangée axiale (19) de billes (3) est diamétralement opposée à la première rangée de billes (20) et elle s'appuie directement dans une rainure axiale (51) de l'arbre intérieur (1) et dans une rainure axiale (32) de l'arbre extérieur (2).

15. Dispositif d'accouplement selon l'une quelconque des revendications 10 à 13 **caractérisé en ce que** :
- les billes (3) sont disposées en deux rangées axiales (20) diamétralement opposées ;
- l'arbre intérieur (1) est muni de deux rainures axiales (31, 51) diamétralement opposées ;
- l'arbre extérieur (2) est muni de deux rainures axiales (32, 52) diamétralement opposées ;

16. Dispositif d'accouplement selon l'une quelconque des revendications 10 à 13, **caractérisé en ce que** :
- les billes (3) sont disposées en trois rangées axiales (20) qui sont disposées transversalement à 120° les unes des autres ;
- l'arbre intérieur (1) est muni de trois rainures axiales (31, 51) qui sont disposés transversalement à 120° les unes des autres ;
- l'arbre extérieur (2) est muni de trois rainures axiales (32, 52) qui sont disposées transversalement à 120°les unes des autres.

17. Dispositif d'accouplement selon l'une quelconque des revendications précédentes, **caractérisé en ce que** qu'il s'applique à la partie intermédiaire (7) d'une colonne de direction de véhicule automobile.

18. Dispositif d'accouplement selon l'une quelconque des revendications 1 à 16, **caractérisé en ce qu'**il s'applique à la partie haute (6) d'une colonne de direction de véhicule automobile.

## Patentansprüche

1. Kupplungsvorrichtung zweier Wellen, einer inneren Welle (1) und einer äußeren Welle (2), die ineinander gemäß der Richtung ihrer gemeinsamen Achse (4) gleiten, wobei die Kupplungsvorrichtung der zwei Wellen Kugeln (3) aufweist, die zwischen der inneren Welle (1) und der äußeren Welle (2) angeordnet sind, wobei jede der Kugeln (3) einerseits in einem konkaven Abschnitt der inneren Welle (1) und andererseits in einem konkaven Abschnitt der äußeren Welle (2) angeordnet ist, **dadurch gekennzeichnet, dass**:
- sich jede der Kugeln (3) auf zwei Schienen (45, 65) verlagert, die auf der einen und der anderen Seite einer mittleren Ebene (30) angeordnet sind, die durch die gemeinsame Achse (4) und durch das Zentrum der Kugeln (3) verläuft,
- jede der zwei Schienen (45, 65) mit dem konkaven Abschnitt (31, 52) einer der zwei Wellen (1, 2) zusammenarbeitet und um jede der Kugeln (3) rotiert, wobei jede Schiene (45, 65) zur gemeinsamen Achse (4) parallel ist,
- wobei jede der zwei Schienen (45, 65) durch ein elastisches Element (70, 80), das in dem konkaven Abschnitt (31, 52) angeordnet ist und sich auf diesem abstützt, gegen jede der Kugeln (3) geschoben wird,
- wobei sich jede der Kugeln (3) direkt gegen den konkaven Abschnitt (32, 51) der anderen Welle (2, 1) verlagert, so dass:
- in Ruhestellung, wenn es keine Kraftmomentübertragung gibt, und in Aktion, wenn es Kraftmomentübertragung gibt,
- jede der Kugeln (3) auf jeder Seite der mittleren Ebene (30) mittels einer Stützzone mit der entsprechenden Schiene (45, 65), die im konkaven Abschnitt (31, 52) einer der zwei Wellen (1, 2) angeordnet ist und die um die Kugel (3) rotiert, immer im Kontakt ist,
- jede der Schienen (45, 65) mittels einer Stützzone mit dem konkaven Abschnitt (31, 52), der ausgebildet ist, um alle Spiele auszugleichen und um ein Ausbrechen jeder der zwei Schienen (45, 65) zu vermeiden, immer im Kontakt ist
- jede der Kugeln (3) mittels einer Stützzone mit dem konkaven Abschnitt (32, 51) der anderen Welle (2, 1) immer im Kontakt ist.

2. Kupplungsvorrichtung nach Anspruch 1, **dadurch gekennzeichnet, dass** der konkave Abschnitt (31, 52) der Welle (1, 2), der die zwei Schienen (Führungen) (45, 65) aufnimmt, einen Grund (35, 55) aufweist, der zwei Flanken (36, 37-56, 57) vereint, die auf der einen und der anderen Seite der mittleren Ebene (30) angeordnet sind, wobei die zwei Flanken (36, 37-56, 57) einen Rundquerschnitt haben, dessen Zentrum (40, 60) sich auf der mittleren Ebene (30) in einem leichten Abstand vom Zentrum der Kugel (3) und näher am Grund (35, 55) als das Zentrum der Kugel (3) befindet, um ein Ausbrechen der zwei Schienen (45, 65) zu vermeiden.

3. Kupplungsvorrichtung nach Anspruch 2, **dadurch gekennzeichnet, dass** sich bei der Kraftmomentübertragung die zwischen der Schiene (45, 65) und der entsprechenden Flanke (36, 37-56, 57) übertragene Kraft innerhalb des Reibungskonus befindet, um jedes Rutschen der Schiene (45, 65) zu vermeiden.

4. Kupplungsvorrichtung nach Anspruch 2, **dadurch gekennzeichnet, dass** die zwei Stütz- und Kontaktflächen jeder der zwei Schienen (45, 65) mit jeder der Kugeln (3) und mit jeder der zwei Flanken (36, 37-56, 57) des konkaven Abschnitts (31, 52) Flächen sind, die abgestimmte Profile haben, um einen erhöhten Kontaktdruck zu vermeiden.

5. Kupplungsvorrichtung nach Anspruch 2, **dadurch gekennzeichnet, dass** die äußere Welle eine innere Fläche aufweist, welche eine Gleitseite bildet, dass die innere Welle eine externe Fläche aufweist, welche eine Gleitseite bildet, und dass jede der zwei Flanken (36, 37-56, 57) des konkaven Abschnitts (31, 52) der Welle (1, 2) eine kleine Wulst (38, 39-58, 59) außerhalb der zwei Flanken (36, 37-56, 57) am Anschluss an die Gleitseite (21, 22) der Welle (1, 2) aufweist.

6. Kupplungsvorrichtung nach einem der vorangehenden Ansprüche, **dadurch gekennzeichnet, dass** männliche Nuten (23) und weibliche Nuten (24) mit abgestimmten Profilen, die ein gewisses Spiel haben, auf der inneren Welle (1) und auf der äußeren Welle (2) derart ausgebildet sind, dass das Kraftmoment bei einem Bruch der Kugeln (3) weiterhin zwischen der inneren Welle (1) und der äußeren Welle (2) übertragbar bleibt.

7. Kupplungsvorrichtung nach einem der vorangehenden Ansprüche, **dadurch gekennzeichnet, dass** die elastischen Elemente (70, 80) in der inneren Welle (1) angeordnet sind und die zwei Schienen (45) schieben, die mit der inneren Welle (1) zusammenarbeiten.

8. Kupplungsvorrichtung nach einem der Ansprüche 1 bis 6, **dadurch gekennzeichnet, dass** die elastischen Elemente (70, 80) in der äußeren Welle (2) angeordnet sind und die zwei Schienen (65) schieben, die mit der äußeren Welle (2) zusammenarbeiten.

9. Kupplungsvorrichtung nach einem der Ansprüche 1 bis 6, **dadurch gekennzeichnet, dass** einige der elastischen Elemente (70, 80) in der inneren Welle (1) und die anderen in der äußeren Welle (2) angeordnet sind, wobei die elastischen Elemente (70, 80) die zwei entsprechenden Schienen (45, 65) schieben, die mit der entsprechenden Welle (1, 2) zusammenarbeiten.

10. Kupplungsvorrichtung nach Anspruch 2, **dadurch gekennzeichnet, dass** die Kugeln (3) in einer oder mehreren axialen Reihen (20) angeordnet sind, wobei:
- für jede Reihe (20) von Kugeln (3) in der äußeren Welle (2) ein konkaver Abschnitt in Form einer axialen Nut (32) eingerichtet ist, deren Querschnitt zwei zueinander geneigte konkave Seiten (33, 34) aufweist, die mit den Kugeln (3) in Kontakt kommen,
- für jede Reihe von Kugeln (3) in der inneren Welle (1) ein konkaver Abschnitt in Form einer axialen Nut (31) eingerichtet ist, deren Querschnitt einen Grund (35) und zwei Flanken (36, 37) aufweist, wobei die zwei Flanken (36, 37) einen Rundquerschnitt haben, dessen Zentrum (40) auf der mittleren Ebene (30) ist, die durch die gemeinsame Achse (4) und durch die Achse der Zentren der Kugeln (3) der Reihe (20) verläuft, wobei das Zentrum (40) näher am Grund (35) ist als das Zentrum der Kugel (3),
- für jede Reihe (20) von Kugeln (3) zwei Schienen (45) auf der einen und der anderen Seite der mittleren Ebene (30) angeordnet sind und mit dem konkaven Abschnitt in Form einer axialen Nut (31) der inneren Welle (1) zusammenarbeiten, wobei jede Schiene (45) die Form eines axialen Stabs hat, dessen Querschnitt hat:
• eine innere Stützfläche (46) mit einer bestimmten konkaven Form, um mit dem entsprechenden Abschnitt der Kugeln (3) mittels eines abgestimmten Profils in Kontakt zu kommen,
• eine äußere Stützfläche (47) mit einer bestimmten konvexen Form, um mit der entsprechenden Flanke (36, 37) konkaver Form mittels eines abgestimmten Profils in Kontakt zu kommen,
- jede der zwei Schienen (45) von einem elastischen Element (70, 80), das zwei zueinander geneigte axiale Stäbe (71, 72-81, 82) aufweist, die sich jeweils auf einer entsprechenden Fläche (41, 42) des Grunds (35) zirka senkrecht zur entsprechenden Flanke (36, 37) abstützen, geschoben wird, damit die Schienen (45) rotieren und um die Achse der Reihe (20) von Kugeln (3) drehen können.

11. Kupplungsvorrichtung nach Anspruch 2, **dadurch gekennzeichnet, dass** die Kugeln in einer oder mehreren axialen Reihen (20) angeordnet sind, wobei:
- für jede Reihe (20) von Kugeln (3) in der inneren Welle (1) ein konkaver Abschnitt in Form einer axialen Nut (51) eingerichtet ist, deren Querschnitt zwei zueinander geneigte konkave Seiten (53, 54) aufweist, die mit den Kugeln (3) in Kontakt kommen,
- für jede Reihe (20) von Kugeln (3) in der äußeren Welle (2) ein konkaver Abschnitt in Form einer axialen Nut (52) eingerichtet ist, deren Querschnitt einen Grund (55) und zwei Flanken (56, 57) aufweist, wobei die zwei Flanken (56, 57) einen Rundquerschnitt haben, dessen Zentrum (60) auf der mittleren Ebene (30) ist, die durch die gemeinsame Achse (4) und durch die Achse der Zentren der Kugeln (3) der Reihe (20) verläuft, wobei das Zentrum (60) näher am Grund (55) ist als das Zentrum der Kugel (3),
- für jede Reihe (20) von Kugeln (3) zwei Schienen (65) auf der einen und der anderen Seite der mittleren Ebene (30) angeordnet sind und mit dem konkaven Abschnitt in Form einer axialen Nut (52) der äußeren Welle (2) zusammenarbeiten, wobei jede Schiene (65) die Form eines axialen Stabs hat, dessen Querschnitt hat:
• eine innere Stützfläche (66) mit einer bestimmten konkaven Form, um mit dem entsprechenden Abschnitt der Kugeln (3) mittels eines abgestimmten Profils in Kontakt zu kommen,
• eine äußere Stützfläche (67) mit einer bestimmten konvexen Form, um mit der entsprechenden Flanke (56, 57) konkaver Form mittels eines abgestimmten Profils in Kontakt zu kommen,
- jede der zwei Schienen (65) von einem elastischen Element (70, 80), das zwei zueinander geneigte axiale Stäbe (71, 72-81, 82) aufweist, die sich jeweils auf einer entsprechenden Fläche (61, 62) des Grunds (55) zirka senkrecht zur entsprechenden Flanke (56, 57) abstützen, geschoben wird, damit die Schienen (65) rotieren und um die Reihe (20) von Kugeln (3) drehen können.

12. Kupplungsvorrichtung nach einem der Ansprüche 10 und 11, **dadurch gekennzeichnet, dass** das elastische Element (70) metallisch ist und zwei zueinander geneigte axiale Stäbe (71, 72) aufweist, wobei jeder axiale Stab (71, 72):
• mit elastischen Zungen (73) ausgestattet ist, die die entsprechende Schiene (45, 65) schieben,
• ein Hakelement (74, 75) an jedem axialen Ende hat
• und sich auf der entsprechenden Fläche (41, 42-61, 62) des Grunds (35, 55) abstützt.

13. Kupplungsvorrichtung nach einem der Ansprüche 10 und 11, **dadurch gekennzeichnet, dass** das elastische Element (80) aus elastischem Material ist und zwei zueinander geneigte axiale Stäbe (81, 82) aufweist, wobei jeder axiale Stab (81, 82):
• mit einer axialen Wulst oder einem Höcker (83, 84) ausgestattet ist, die/der die entsprechende Schiene (45, 65) schiebt
• und sich auf der entsprechenden Fläche (41, 42-61, 62) des Grunds (35, 55) abstützt.

14. Kupplungsvorrichtung nach einem der Ansprüche 10 bis 13, **dadurch gekennzeichnet, dass**:
- die Kugeln (3) in einer ersten axialen Reihe (20) angeordnet sind, wobei die innere Welle (1) mit einer axialen Nut (31, 51) ausgestattet ist und die äußere Welle (2) mit einer axialen Nut (32, 52) ausgestattet ist,
- eine andere axiale Reihe (19) von Kugeln (3) der ersten Kugelreihe (20) diametral gegenüberliegt und sich diese direkt in einer axialen Nut (51) der inneren Welle (1) und in einer axialen Nut (32) der äußeren Welle (2) abstützt.

15. Kupplungsvorrichtung nach einem der Ansprüche 10 bis 13, **dadurch gekennzeichnet, dass**:
- die Kugeln (3) in zwei diametral gegenüberliegenden axialen Reihen (20) angeordnet sind,
- die innere Welle (1) mit zwei diametral gegenüberliegenden axialen Nuten (31, 51) ausgestattet ist,
- die äußere Welle (2) mit zwei diametral gegenüberliegenden axialen Nuten (32, 52) ausgestattet ist.

16. Kupplungsvorrichtung nach einem der Ansprüche 10 bis 13, **dadurch gekennzeichnet, dass**:
- die Kugeln (3) in drei axialen Reihen (20) angeordnet sind, die transversal in 120° zueinander angeordnet sind,
- die innere Welle (1) mit drei axialen Nuten (31, 51) ausgestattet ist, die transversal in 120° zueinander angeordnet sind,
- die äußere Welle (2) mit drei axialen Nuten (32, 52) ausgestattet ist, die transversal in 120° zueinander angeordnet sind.

17. Kupplungsvorrichtung nach einem der vorangehenden Ansprüche, **dadurch gekennzeichnet, dass** sie am Übergangsabschnitt (7) einer Lenksäule eines Kraftfahrzeugs anliegt.

18. Kupplungsvorrichtung nach einem der Ansprüche 1 bis 16, **dadurch gekennzeichnet, dass** sie am oberen Abschnitt (6) einer Lenksäule eines Kraftfahrzeugs anliegt.

## Claims

1. A device for coupling two shafts, an inner shaft (1) and an outer shaft (2) which slide in each other along the direction of their common axis (4), said device for coupling both shafts includes balls (3) which are arranged between the inner shaft (1) and the outer shaft (2), each of said balls (3) being arranged in a concave portion of the inner shaft (1) on the one hand, and in a concave portion of the outer shaft (2) on the other hand, **characterized in that**:
- each of said balls (3) move on two rails (45, 65) arranged on either side of a median plane (30) passing through the common axis (4) and through the center of said balls (3);
- each of the two rails (45, 65) cooperates with the concave portion (31, 52) of one of the two shafts (1, 2) and pivots around each of said balls (3) each rail (45, 65) being parallel to the common axis (4);
- each of the two rails (45, 65) being pushed against each of said balls (3) by an elastic member (70, 80); arranged and being supported in said concave portion (31, 52);
- each of said balls (3) m oving directly against the concave portion (32, 51) of the other shaft (2, 1), so that:
- at rest, when there is no torque transmission, and, in operation, when there is torque transmission,
- each of said balls (3) is always in contact on each side of the median plane (30) through a bearing area with the corresponding rail (45, 65) arranged in the concave portion (31, 52) of one of the two shafts (1, 2) and which pivot around said ball (3);
- each of said rails (45, 65) is always in contact through a bearing area with said concave portion (31, 52), which is laid out so as to compensate all the plays and to avoid escape of each of the two rails (45, 65),
- each of said balls (3) is always in contact through a bearing area with the concave portion (32, 51) of the other shaft (2, 1).

2. The coupling device according to claim 1, **characterized in that** the concave portion (31, 52) of the shaft (1, 2) receiving both rails (guides) (45, 65), includes a bottom (35, 55) joining two flanks (36, 37-56, 57) positioned on either side of the median plane (30), both flanks (36, 37-56, 57) having a circular section, the center (40, 60) of which is located on the median plane 30 at a slight distance from the center of the ball (3) and closer to said bottom (35, 55) than said center of the ball (3), so as to avoid the escape of both rails (45, 65).

3. The coupling device according to claim 2, **characterized in that** during the transmission of the torque, the force transmitted between the rail (45, 65) and the corresponding flank (36, 37-56, 57) is located inside the friction cone in order to avoid any sliding of said rail (45, 65).

4. The coupling device according to claim 2, **characterized in that** the two bearing faces of each of the two rails (45, 65) and in contact with each of the balls (3) and with each of the two flanks (36, 37-56, 57) of the concave portion (31, 52) are faces having conjugated profiles in order to avoid high contact pressure.

5. The coupling device according to claim 2, **characterized in that** the outer shaft has an inner face that constitutes a sliding face, the inner shaft has an outer face that constitutes a sliding face and **in that** each of the two flanks (36, 37-56, 57) of the concave portion (31, 52) of the shafts (1, 2) includes a slight bulge (38, 39-58, 59) outside the two flanks (36, 37-56, 57) at the junction of the sliding face (21, 22) of said shaft (1, 2).

6. The coupling device according to any of the preceding claims, **characterized in that** male grooves (23) and female grooves (24) with conjugated profiles having some play, are laid out on the inner shaft (1) and on the outer shaft (2), so that in the case of failure of the balls (3), the torque may still be transmitted between the inner shaft (1) and the outer shaft (2).

7. The coupling device according to any of the preceding claims, **characterized in that** the elastic members (70, 80) are arranged in the inner shaft (1) and push both rails (45) which cooperate with the inner shaft (1).

8. The coupling device according to any of claims 1 to 6, **characterized in that** the elastic members (70, 80) are arranged in the outer shaft (2) and push both rails (65), which cooperate with the outer shaft (2).

9. The coupling device according to any of claims 1 to 6, **characterized in that** the elastic members (70, 80) are for some of them arranged in the inner shafts (1) and for the others in the outer shaft (2), said elastic members (70, 80) pushing the two corresponding rails (45, 65), which cooperate with the relevant shafts (1, 2).

10. The coupling device according to claim 2, **characterized in that** the balls (3) are arranged in one or more axial rows (20):
- for each row (20) of balls (3), a concave portion with the shape of an axial groove (32), the section of which includes two concave faces (33, 34) tilted with respect to each other, which come into contact with the balls (3), is laid out in the outer shaft (2),
- for each row of balls (3), a concave portion with the shape of an axial groove (31), the section of which includes a bottom (35) and two flanks (36, 37) is laid out in the inner shaft (1), both flanks (36, 37) having a circular section, the center (40) of which is on the median plane (30) passing through the common axis (4) and through the axis of the centers of the balls (3) of said row (20); said center (40) being closer to said bottom (35) than the center of the ball (3);
- for each row (20) of balls (3), two rails (45) are arranged on either side of the median plane (30) and cooperate with the convex portion with the shape of an axial groove (31) of the inner shaft (1) each rail (45) has the shape of an axial bar, the section of which has
• an internal bearing face (46) with a concave shape determined for coming into contact with the relevant portion of said balls (3), through a conjugated profile;
• an external bearing face (47) with a convex shape determined for coming into contact with the corresponding flank (36, 37) of concave shape, through a conjugated profile;
- each of the two rails (45) is pushed by an elastic member (70, 80) including two axial bars (71, 72-81, 82) tilted with respect to each other, each of which bears upon a corresponding face (41, 42) of the bottom (35) approximately perpendicular to the corresponding flank (36, 37), so that the rails (45) may pivot and rotate around the axis of the row (20) of balls (3).

11. The coupling device according to claim 2, **characterized in that** the balls are arranged in one or more axial rows (20):
- for each row (20) of balls (3), a concave portion with the shape of an axial groove (51), the section of which includes two concave faces (53, 54) tilted with respect to each other, which come into contact with the balls (3), is laid out in the inner shafts (1);
- for each row (20) of balls (3), a concave portion with the shape of an axial groove (52), the section of which includes a bottom (55) and two flanks (56, 57) is laid out in the outer shaft (2), both flanks (56, 57) having a circular section, the center (60) of which is on the median plane (30) passing through the common axis (4) and through the axis of the centers of the balls (3) of said row (20), said center (60) being closer to said bottom (55) than the center of the ball (3);
- for each row (20) of balls (3), two rails (65) are arranged on either side of the median plane (30) and cooperate with the concave portion with the shape of an axial groove (52) of the outer shafts (2), each rail (65) has the shape of an axial bar, the section of which has:
• an internal bearing face (66) with a determined concave shape for coming into contact with the relevant portion of said balls (3), through a conjugated profile;
• an external bearing face (67) with a determined convex shape for coming into contact with the corresponding flanks (56, 57) of concave shape, through a conjugated profile;
- each of the two rails (65) is pushed by an elastic member (70, 80) including two axial bars (71, 72-81, 82) tilted with respect to each other, each of which bears upon a corresponding face (61, 62) of the bottom (55) approximately perpendicular to the corresponding flank (56, 57), so that the rails (65) may pivot or rotate around the row (20) of balls (3).

12. The coupling device according to any of claims 10 and 11, **characterized in that** the elastic member (70) is metal and includes two axial bars (71, 72) tilted with respect to each other, each axial bar (71, 72):
• being provided with elastic tabs (73) which push the corresponding rail (45, 65),
• having an attachment member (74, 75) at each axial end,
• and bearing upon the corresponding face (41, 42-61, 62) of the bottom (35, 55).

13. The coupling device according to any of claims 10 and 11, **characterized in that** the elastic member (80) is in elastic material and includes two axial bars (81, 82) tilted with respect to each other, each axial bar (81, 82):
• being provided with an axial bulge or boss (83, 84) which pushes the corresponding rail (45, 65),
• and bearing upon the corresponding face (41, 42-61, 62) of the bottom (35, 55).

14. The coupling device according to any of claims 10 to 13, **characterized in that**:
- the balls (3) are arranged in a first axial row (20), the inner shaft (1) being provided with an axial groove (31, 51), and the outer shaft (2) being provided with an axial groove (32, 52);
- another axial row (19) of balls (3) is diametrically opposite to the first row of balls (20) and is directly supported in an axial groove (51) of the inner shaft (1) and in an axial groove (32) of the outer shaft (2).

15. The coupling device according to any of claims 10 to 13, **characterized in that**:
- the balls (3) are arranged in two diametrically opposite axial rows (20);
- the inner shaft (1) is provided with two diametrically opposite axial grooves (31, 51);
- the outer shaft (2) is provided with two diametrically opposite axial grooves (32, 52).

16. The coupling device according to claims 10 to 13, **characterized in that**:
- the balls (3) are arranged in three axial rows (20) which are arranged transversely at 120° from each other;
- the inner shaft (1) is provided with three axial grooves (31, 51) which are arranged transversely at 120° from each other;
- the outer shaft (2) is provided with three axial grooves (32, 52) which are arranged transversely at 120° from each other.

17. The coupling device according to any of the preceding claims **characterized in that** it is applied to the intermediate portion (7) of a motor vehicle steering column.

18. The coupling device according to any of claims 1 to 16, **characterized in that** it is applied to the upper portion (6) of a motor vehicle steering column.
